(19) Europäisches Patentamt
European Patent Office
Office européen des brevets

(11) **EP 4 265 576 A1**

(12) **EUROPEAN PATENT APPLICATION**
published in accordance with Art. 153(4) EPC

(43) Date of publication:
**25.10.2023 Bulletin 2023/43**

(21) Application number: **21906316.1**

(22) Date of filing: **29.11.2021**

(51) International Patent Classification (IPC):
**C03C 17/245** (2006.01) **C03C 17/34** (2006.01)
**H05B 6/12** (2006.01) **F24C 15/10** (2006.01)

(52) Cooperative Patent Classification (CPC):
**C03C 17/245; C03C 17/34; F24C 15/10; H05B 6/12**

(86) International application number:
**PCT/JP2021/043656**

(87) International publication number:
**WO 2022/130953 (23.06.2022 Gazette 2022/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.12.2020 JP 2020208425**

(71) Applicants:
• **Nippon Electric Glass Co., Ltd.
Otsu-shi, Shiga 520-8639 (JP)**
• **Tohoku University
Sendai-shi, Miyagi 980-8577 (JP)**

(72) Inventors:
• **YAMAZAKI, Yusuke
Otsu-shi, Shiga 520-8639 (JP)**
• **IMURA, Masaaki
Otsu-shi, Shiga 520-8639 (JP)**
• **TAKAMURA, Hitoshi
Sendai-shi, Miyagi 980-8577 (JP)**
• **YAMAGUCHI, Mina
Sendai-shi, Miyagi 980-8577 (JP)**

(74) Representative: **Tetzner, Michael
Tetzner & Partner mbB
Patent- und Rechtsanwälte
Van-Gogh-Strasse 3
81479 München (DE)**

(54) **FILM-COVERED TRANSPARENT SUBSTRATE AND TOP PLATE FOR COOKING DEVICE**

(57) Provided is a film-covered transparent substrate that does not readily change in optical characteristics by heating and exhibits excellent aesthetic properties when a light source is turned off. The film-covered transparent substrate (1) includes a transparent substrate (2), and a light-absorbing film (3) provided on one principal surface (2a) of the transparent substrate (2). The light-absorbing film (3) contains Ag, Al, and Fe in proportions resulting in a mole ratio of Ag:Al:Fe = x:y:z, where $x + y + z = 1$, $0 < x < 1$, $0 < y < 1$, $0 \leq z < 1$.

FIG. 1

EP 4 265 576 A1

**Description**

Technical Field

The present invention relates to a film-covered transparent substrate and a top plate for a cooking device that uses the film-covered transparent substrate.

Background Art

Conventionally, in cooking devices such as electromagnetic cooking devices, radiant heater cooking devices, or gas cooking devices, a top plate made of black glass or transparent glass provided with a black coating film has been used to conceal a structure inside the cooking devices. In such cooking devices, a light-emitting diode (LED), a liquid crystal display, a liquid crystal display including a touch panel function, or the like may be used in combination to display various information, such as a power supply and a heating state, on the top plate.

Patent Document 1 below discloses a top plate for a cooking device, the top plate including a glass plate, an inorganic pigment layer provided on the glass plate, and a display layer provided on the inorganic pigment layer. The inorganic pigment layer includes a pigment and glass. The display layer includes a transparent resin portion that transmits LED light or the like and a heat-resistant resin portion that blocks the LED light or the like. In Patent Document 1, characters, numbers, symbols, and the like are displayed by changing a shape of a transmission portion that transmits this LED light or the like or by transmitting light patterned in the transmission portion.

Citation List

Patent Literature

Patent Document 1: JP 2014-215018 A

Summary of Invention

Technical Problem

In a case in which an LED, a liquid crystal display, a liquid crystal display having a touch panel function, or the like is used in combination for the top plate for a cooking device, it is desired that various information is made clearly visible when a light source is turned on and the structure inside the cooking device is concealed when the light source is turned off. However, in a case in which a glass substrate colored in black is used for the top plate, the structure inside the cooking device can be concealed when the light source is turned off, but there is a problem in that various information is difficult to see when the light source is turned on.

In this respect, in Patent Document 1, a black inorganic pigment layer is provided in a display region as well in an attempt to conceal the structure inside the cooking device. However, when a black inorganic pigment layer is provided as in the top plate of Patent Document 1, the color may not be achromatic black when the light source is turned off, diminishing aesthetic properties.

Further, the top plate for a cooking device is repeatedly heated and used, and thus high heat resistance is desired. However, when a black inorganic pigment layer is provided as in the top plate of Patent Document 1, optical characteristics may change by heating. Therefore, even in this case, the color may not be achromatic black when the light source is turned off, diminishing the aesthetic properties.

An object of the present invention is to provide a film-covered transparent substrate and a top plate for a cooking device that uses the film-covered transparent substrate, the film-covered transparent substrate and the top plate not readily changing in optical characteristics by heating and exhibiting excellent aesthetic properties when a light source is turned off.

Solution to Problem

A film-covered transparent substrate according to the present invention includes a transparent substrate, and a light-absorbing film provided on one principal surface of the transparent substrate. The light-absorbing film contains Ag, Al, and Fe in proportions resulting in a mole ratio of Ag:Al:Fe = x:y:z, where $x + y + z = 1$, $0 < x < 1$, $0 < y < 1$, $0 \leq z < 1$.

In the present invention, preferably the light-absorbing film further contains O.

In the present invention, preferably a content ratio $(y/(y + z))$ of Al to a total amount of Al and Fe is 0.10 or greater in mole ratio.

In the present invention, preferably a content ratio (x/(x + y + z)) of Ag to a total amount of Ag, Al, and Fe is 0.05 or greater and 0.90 or less in mole ratio.

In the present invention, preferably an average absorption coefficient of the light-absorbing film at wavelengths from 400 nm to 700 nm is 0.5 $\mu m^{-1}$ or greater and 80 $\mu m^{-1}$ or less.

In the present invention, preferably, in the light-absorbing film, $\alpha1/\alpha2$ is 0.8 or greater and 2.0 or less, and $\alpha3/\alpha2$ is 0.8 or greater and 2.0 or less, where $\alpha1$ is an absorption coefficient at a wavelength of 436 nm, $\alpha2$ is an absorption coefficient at a wavelength of 546 nm, and $\alpha3$ is an absorption coefficient at a wavelength of 700 nm. In the light-absorbing film, more preferably the $\alpha1/\alpha2$ is 0.8 or greater and 1.25 or less, and the $\alpha3/\alpha2$ is 0.8 or greater and 1.25 or less.

In the present invention, preferably, in the light-absorbing film, an absorption average deviation M expressed by the equation (1) below is 0.30 or less:

[Equation 1]

$$M = \frac{\int_{400}^{700}|\alpha_{AVE} - \alpha_\lambda|\ d\lambda}{300\ \alpha_{AVE}} \quad \cdot \cdot \cdot \text{ EQUATION (1)}$$

where $\alpha_\lambda$ is an absorption coefficient at wavelength $\lambda$, and $\alpha_{AVE}$ is an average absorption coefficient at wavelengths from 400 nm to 700 nm.

In the present invention, preferably a dielectric multilayer film is further provided on the light-absorbing film.

In the present invention, preferably the film-covered transparent substrate includes a dielectric multilayer film provided on one principal surface of the transparent substrate and including the light-absorbing film. Preferably, the dielectric multilayer film is a layered film obtained by alternately layering a high refractive index film having a relatively high refractive index and a low refractive index film having a relatively low refractive index, and at least one layer of the high refractive index film is the light-absorbing film.

In the present invention, preferably the film-covered transparent substrate includes a dielectric multilayer film provided on one principal surface of the transparent substrate and including the light-absorbing film. Preferably, the dielectric multilayer film is a layered film obtained by alternately layering a high refractive index film having a relatively high refractive index and a low refractive index film having a relatively low refractive index, and at least one layer of the low refractive index film is the light-absorbing film.

A top plate for a cooking device according to the present invention includes the film-covered transparent substrate configured according to the present invention. The transparent substrate includes a cooking surface on which cookware is placed and a back surface opposite to the cooking surface. The light-absorbing film is disposed on the back surface of the transparent substrate.

A cover glass according to the present invention is a cover glass used in a display. The cover glass includes the film-covered transparent substrate configured according to the present invention. The light-absorbing film is disposed on a principal surface opposite to a side provided with the display of the transparent.

Advantageous Effects of Invention

According to the present invention, it is possible to provide a film-covered transparent substrate and a top plate for a cooking device that uses the film-covered transparent substrate, the film-covered transparent substrate and the top plate not readily changing in optical characteristics by heating and exhibiting excellent aesthetic properties when a light source is turned off.

Brief Description of Drawings

FIG. 1 is a schematic cross-sectional view illustrating a film-covered transparent substrate according to a first embodiment of the present invention.

FIG. 2 is a schematic cross-sectional view illustrating a film-covered transparent substrate according to a second embodiment of the present invention.

FIG. 3 is a schematic cross-sectional view illustrating a film-covered transparent substrate according to a third embodiment of the present invention.

FIG. 4 is a schematic cross-sectional view illustrating a film-covered transparent substrate according to a fourth embodiment of the present invention.

FIG. 5 is a schematic cross-sectional view illustrating a top plate for a cooking device according to an embodiment of the present invention.

FIG. 6 is a graph showing absorption coefficients of light-absorbing films obtained in examples 1 to 4 and comparative example 1 at wavelengths from 400 nm to 700 nm.

FIG. 7 is a graph showing transmission spectra of a film-covered transparent substrate after heat treatment in example 3.

FIG. 8 is a graph showing transmission spectra of a film-covered transparent substrate after heat treatment in comparative example 1.

FIG. 9 is a schematic cross-sectional view illustrating a film-covered transparent substrate according to a fifth embodiment of the present invention.

FIG. 10 is a schematic cross-sectional view illustrating a cover glass according to an embodiment of the present invention.

Description of Embodiments

Preferred embodiments are described below. However, the following embodiments are merely examples, and the present invention is not limited to the following embodiments. In each of the drawings, members having substantially the same function may be denoted by the same reference sign.

Film-covered Transparent Substrate

First Embodiment

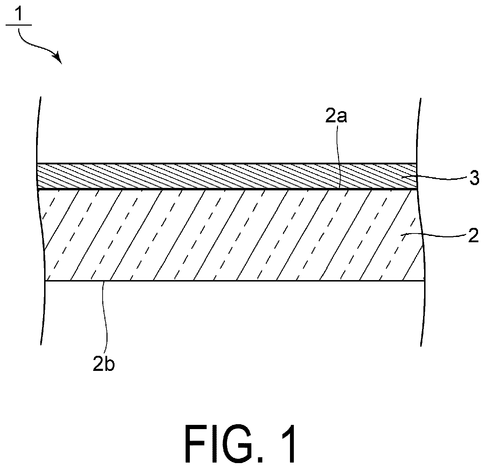

FIG. 1 is a schematic cross-sectional view illustrating a film-covered transparent substrate according to a first embodiment of the present invention. As illustrated in FIG. 1, a film-covered transparent substrate 1 includes a transparent substrate 2 and a light-absorbing film 3. The transparent substrate 2 includes a first principal surface 2a and a second principal surface 2b facing each other. The light-absorbing film 3 is provided on the first principal surface 2a of the transparent substrate 2.

In the present embodiment, the transparent substrate 2 has a substantially rectangular plate-like shape. The transparent substrate 2 may have a substantially disc-like shape, for example, and the shape is not particularly limited.

The transparent substrate 2 transmits light at wavelengths from 400 nm to 700 nm. The transparent substrate 2 may be colored and transparent, but is preferably colorless and transparent from the viewpoint of further enhancing aesthetic properties. Note that, in the present specification, "transparent" refers to a light transmittance of 80% or greater in a visible wavelength range from 400 nm to 700 nm. Further, "colorless" refers to a chroma of transmitted light being 2 or less when irradiated with a D65 light source.

In the present embodiment, the transparent substrate 2 is made of glass. However, the transparent substrate 2 may be made of another material such as ceramic as long as the substrate is transparent.

The glass constituting the transparent substrate 2 is preferably glass having a high glass transition temperature and low expansion, or crystallized glass having low expansion. Specific examples of crystallized glass having low expansion include "N-0" manufactured by Nippon Electric Glass Co., Ltd. Note that, as the transparent substrate 2, borosilicate glass, alkali-free glass, aluminosilicate glass, or the like may be used. In this case, heat resistance of the transparent substrate 2 can be further enhanced, and a thermal expansion coefficient can be further reduced. As a result, suitable use can be found in applications such as a top plate for a cooking device in which heating and cooling are repeated.

A thickness of the transparent substrate 2 is not particularly limited. The thickness of the transparent substrate 2 may be set as appropriate in accordance with light transmittance or the like. The thickness of the transparent substrate 2 may be about from 0.035 mm to 5 mm, for example.

The light-absorbing film 3 contains Ag, Al, and Fe in proportions resulting in a mole ratio of Ag:Al:Fe = x:y:z, where $x + y + z = 1$, $0 < x < 1$, $0 < y < 1$, $0 \leq z < 1$. In particular, in the present embodiment, the light-absorbing film 3 further contains oxygen (O). Specifically, when $0 < z < 1$, the light-absorbing film 3 is a film containing Ag, aluminum oxide, and iron oxide. Further, when $z = 0$, the light-absorbing film 3 is a film containing Ag and aluminum oxide.

A method for forming the light-absorbing film 3 is not particularly limited. For example, the light-absorbing film 3 can be formed by a physical vapor deposition method (PVD method), such as a sputtering method and a pulsed laser deposition (PLD) method, or a vapor deposition method.

In the sputtering method or the pulsed laser deposition (PLD) method, the light-absorbing film 3 can be formed by using, for example, a mixed target of Ag, Al, and FeO. Alternatively, a mixed target of Ag and FeO and a target of Al may be separately used. Note that FeO need not be contained in each target.

Further, for example, film formation by a sputtering method can be performed at a substrate temperature from 15°C to 400°C, a flow rate from 10 sccm to 1000 sccm of an inert gas, such as argon gas, as the sputtering gas, a flow rate from 0 sccm to 400 sccm of an oxygen gas, and an applied electric power from 1 kW to 60 kW.

The film-covered transparent substrate 1 of the present embodiment, with the configuration described above, makes it possible to make the display of various information clearly visible when the light source is turned on and achieve excellent aesthetic properties when the light source is turned off. In particular, the optical characteristics do not readily change even by heating, making it possible to stably maintain excellent aesthetic properties when the light source is turned off. This can be explained as follows.

In a case in which a glass substrate colored in black is used as the substrate of a top plate for a cooking device or the like in the related art, a structure inside the cooking device can be concealed when the light source, such as an LED or liquid crystal display, is turned off, but there is a problem in that various information is difficult to see when the light source is turned on. On the other hand, in a case in which a black inorganic pigment layer is provided on a transparent substrate, such as a glass substrate, the color may not be achromatic black when the light source is turned off, diminishing the aesthetic properties.

In this respect, the top plate in the related art is problematic in that the material constituting the inorganic pigment layer strongly absorbs visible light on the short wavelength side (violet or blue side; high light energy) and weakly absorbs visible light on the long wavelength side (red side; low light energy), and thus an achromatic black color is not obtained.

In contrast, in the light-absorbing film 3 of the present embodiment, the light absorption on the short wavelength side of visible light can be carried out by the light absorption by the band gap of an iron oxide, such as $Fe_2O_3$, and the light absorption on the long wavelength side can be carried out by the light absorption by the free electrons of Ag. Therefore, the top plate is achromatic black even when the light is turned off, resulting in excellent aesthetic properties. Further, replacing the iron oxide with aluminum oxide in whole or in part can enhance heat resistance while maintaining light absorption on the short wavelength side of visible light.

More specifically, an absorption coefficient $\alpha(\lambda)$ dependent on the wavelength of light is expressed by the equation (I) below.

$$\alpha(\lambda) = \alpha\lambda_{\text{band gap type}} + \alpha\lambda_{\text{free electron type}} = A \cdot \lambda^{-n} + B \cdot \lambda^2 \approx C \cdot \lambda^0 \text{ Equation (I)}$$

In the equation (I), A, B, and C are constants and n > 0.

That is, the absorption coefficient by the band gap of iron oxide or the like responsible for light absorption on the short wavelength side of visible light is proportional to the n-th power of the reciprocal of the wavelength, and the absorption coefficient by the free electrons of Ag responsible for light absorption on the long wavelength side is proportional to the square of the wavelength. Thus, the absorption coefficient $\alpha(\lambda)$ of the light-absorbing film 3 expressed by the sum of these absorption coefficients is generally independent of the wavelength and tends to be a constant value at any wavelength.

As described above, the film-covered transparent substrate 1 including the light-absorbing film 3 can uniformly absorb light, in particular in substantially the entire region of visible light. Further, heat resistance is enhanced, and thus the optical characteristics do not readily change by heating. Therefore, in the film-covered transparent substrate 1, an achromatic black color can be obtained when the light source is turned off, resulting in stably excellent aesthetic properties. Accordingly, the film-covered transparent substrate 1 can be suitably used for applications such as a top plate for a cooking device and a cover glass for a display.

In the light-absorbing film 3, a content ratio (y/(y + z)) of Al to a total amount of Al and Fe is, in mole ratio, preferably 0.10 or greater, more preferably 0.30 or greater, even more preferably 0.50 or greater, and particularly preferably 0.60 or greater. When the content ratio (y/(y + z)) is equal to or greater than the lower limit value described above, it is possible to make a change in optical characteristics caused by heating even less likely. Note that the content ratio (y/(y + z)) may be 1.0 in mole ratio.

In the light-absorbing film 3, a content ratio (x/(x + y + z)) of Ag to a total amount of Ag, Al, and Fe is, in mole ratio, preferably 0.05 or greater, more preferably 0.12 or greater, preferably 0.90 or less, and more preferably 0.80 or less. When the content ratio (x/(x + y + z)) is within the range described above, light absorption on the long wavelength side of visible light can be appropriately increased, light can be more uniformly absorbed in substantially the entire region of visible light, and higher electrical insulation properties can be obtained.

In the light-absorbing film 3, a content ratio (y/(x + y + z)) of Al to the total amount of Ag, Al, and Fe is, in mole ratio, preferably 0.04 or greater and more preferably 0.27 or greater, and preferably 0.95 or less and more preferably 0.80 or less. When the content ratio (y/(x + y + z)) is within the range described above, it is possible to make a change in optical characteristics caused by heating even less likely.

In the light-absorbing film 3, a content ratio (z/(x + y + z)) of Fe to the total amount of Ag, Al, and Fe is, in mole ratio, preferably 0.08 or greater and more preferably 0.18 or greater, and preferably 0.76 or less and more preferably 0.64 or less. When the content ratio (z/(x + y + z)) is within the range described above, light absorption on the short wavelength side of visible light can be appropriately increased, and light can be more uniformly absorbed in substantially the entire region of visible light.

Note that the contents of Ag, Al, and Fe in the light-absorbing film 3 can be measured by energy dispersive X-ray analysis, wavelength dispersive X-ray analysis, inductively coupled plasma mass spectrometry, or the like.

Note that, in the present invention, in the light-absorbing film 3, preferably aluminum oxide and/or iron oxide constitutes a matrix and Ag is dispersed in the matrix. In this case, insulating properties of the light-absorbing film 3 can be further enhanced. Note that as long as the insulating properties are maintained, a portion of the Ag may be present as a matrix component. Accordingly, in this case, suitable use can be found in a display having a touch panel function, or a top plate for a cooking device with a built-in display including a touch panel function.

An average absorption coefficient of the light-absorbing film 3 at wavelengths from 400 nm to 700 nm is preferably 0.5 $\mu$m$^{-1}$ or greater and more preferably 10 $\mu$m$^{-1}$ or greater, and preferably 80 $\mu$m$^{-1}$ or less and more preferably 70 $\mu$m$^{-1}$ or less. In a case in which the average absorption coefficient is equal to or greater than the lower limit value described above and the material is used for a top plate for a cooking device, for example, the structure inside the cooking device can be more reliably concealed. On the other hand, in a case in which the average absorption coefficient is equal to or less than the upper limit value described above, it is possible to more reliably make the display of various information clearly visible when the light source is turned on. Note that the absorption coefficient of the light-absorbing film 3 is derived from spectroscopic ellipsometry, or measurement of transmittance, reflectance, and the like by a spectrophotometer. At that time, measurements are made from the side of the light-absorbing film 3 in a state of being layered on the transparent substrate 2.

Further, in the light-absorbing film 3, preferably $\alpha 1/\alpha 2$ is from 0.8 to 2.0, and $\alpha 3/\alpha 2$ is from 0.8 to 2.0, where $\alpha 1$ is an absorption coefficient at a wavelength of 436 nm, $\alpha 2$ is an absorption coefficient at a wavelength of 546 nm, and $\alpha 3$ is an absorption coefficient at a wavelength of 700 nm. Further, more preferably $\alpha 1/\alpha 2$ is from 0.8 to 1.25, and $\alpha 3/\alpha 2$ is from 0.8 to 1.25. In this case, it is possible to obtain a more achromatic black color when the light source is turned off, and thus further improve the aesthetic properties.

Further, preferably, in the light-absorbing film 3, an absorption average deviation M expressed by the equation (1) below is 0.30 or less. In this case, it is possible to obtain a more achromatic black color when the light source is turned off, and thus further improve the aesthetic properties.

[Equation 2]

$$M = \frac{\int_{400}^{700} |\alpha_{AVE} - \alpha_\lambda|\ d\lambda}{300\ \alpha_{AVE}} \quad \cdots \text{EQUATION (1)}$$

In the equation, $\alpha_\lambda$ is an absorption coefficient at the wavelength $\lambda$ and $\alpha_{AVE}$ is an average absorption coefficient at wavelengths from 400 nm to 700 nm.

In the present invention, the content of Ag in the light-absorbing film 3 is, in mol%, preferably 5% or greater, more preferably 10% or greater, and even more preferably 12% or greater, and preferably 80% or less, more preferably 70% or less, even more preferably 60% or less, and particularly preferably 55% or less. When the content of Ag in the light-absorbing film 3 is less than the lower limit value described above, the ratio $\alpha 1/\alpha 2$ described above may become too large, the ratio $\alpha 3/\alpha 2$ described above may become too small, and the absorption average deviation M described above may become too large. On the other hand, when the content of Ag in the light-absorbing film 3 is greater than the upper limit value described above, a sheet resistance may readily decrease. Further, the ratio $\alpha 1/\alpha 2$ described above may become too small, the ratio $\alpha 3/\alpha 2$ described above may become too large, and the absorption average deviation M described above may become too large.

A thickness of the light-absorbing film 3 is not particularly limited, but is preferably 5 nm or greater, more preferably 10 nm or greater, even more preferably 15 nm or greater, and particularly preferably 20 nm or greater, and preferably 2 $\mu$m or less, more preferably 1 $\mu$m or less, even more preferably 500 nm or less, and particularly preferably 100 nm or less. When the thickness of the light-absorbing film 3 is within the range described above, the display of various information can be made more clearly visible when the light source is turned on, and the aesthetic properties can be further improved when the light source is turned off.

A chroma $C^*_T$ of light transmitted through the film-covered transparent substrate 1 is preferably 2 or less, more preferably 1 or less, even more preferably 0.8 or less, and particularly preferably 0.5 or less. Note that a lower limit value for the chroma $C^*_T$ of the light transmitted through the film-covered transparent substrate 1 is not particularly limited, and is, for example, 0. A chroma $C^*_R$ of the reflected light of the film-covered transparent substrate 1 is preferably 2 or less, more preferably 1 or less, even more preferably 0.7 or less, and particularly preferably 0.5 or less. Note that a lower limit value for the chroma $C^*_R$ of the reflected light of the film-covered transparent substrate 1 is not particularly limited, and is, for example, 0. Here, the chroma $C^*$ is the chroma $C^*$ when irradiated with a D65 light source in the $L^*a^*b^*$ color system adopted in JIS Z 8781-4:2013. Note that the chroma $C^*$ is obtained from chromaticities $a^*$ and $b^*$, and is expressed by $C^* = ((a^*)^2 + (b^*)^2)^{1/2}$. In this case, it is possible to obtain a more achromatic black color when the light source is turned off, and thus further improve the aesthetic properties.

Note that, from the viewpoint of making a boundary between a display region A and a non-display region B described below even less visible, an absolute value of a difference in lightness ($L^*$) of the reflected light between the display region A and the non-display region B is preferably 5 or less, more preferably 3 or less, and even more preferably 1 or less. Note that a lower limit value for the absolute value of the difference in lightness ($L^*$) of the reflected light between the display region A and the non-display region B is, for example, 0. Further, an absolute value of a difference in chroma ($C^*_R$) of the reflected light between the display region A and the non-display region B is preferably 0.7 or less, more preferably 0.4 or less, and even more preferably 0.3 or less. Note that a lower limit value for the absolute value of the difference in chroma ($C^*_R$) of the reflected light between the display region A and the non-display region B is, for example, 0.

The sheet resistance of the light-absorbing film 3 is preferably $10^5\ \Omega$ ($10^5\ \Omega/\square$) or greater, more preferably $10^6\ \Omega$ ($10^6\ \Omega/\square$) or greater, and even more preferably $10^7$ S2 ($10^7\ \Omega/\square$) or greater. In this case, the light-absorbing film 3 has insulating properties. Thus, in a case in which the light-absorbing film 3 is used as a cover glass of an image display device or a top plate of a cooking device, even if a touch panel is provided, a change in electrostatic capacitance due to contact with a finger, which is necessary for an electrostatic capacitance-type touch sensor, is maintained, and thus the touch panel can function. Note that an upper limit value for the sheet resistance of the light-absorbing film 3 is, for example, $10^{15}$ Q ($10^{15}\ \Omega/\square$). Further, the sheet resistance can be measured by a method specified in ASTM D257 or JIS K 6271-6 (2008).

Second to Fifth Embodiments

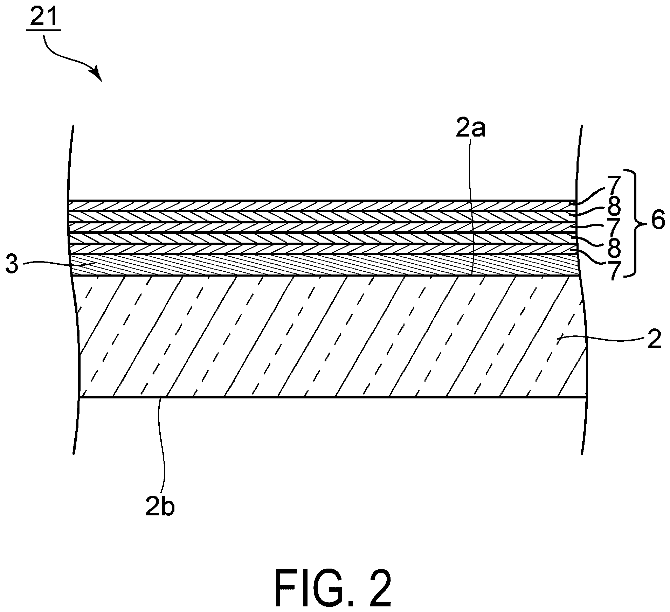

FIG. 2 is a schematic cross-sectional view illustrating a film-covered transparent substrate according to a second embodiment of the present invention. As illustrated in FIG. 2, in the film-covered transparent substrate 21, a dielectric multilayer film 6 is further provided on the light-absorbing film 3. Other points are similar to those in the first embodiment.

The dielectric multilayer film 6 is a layered film obtained by alternately layering a low refractive index film 7 having a relatively low refractive index and a high refractive index film 8 having a relatively high refractive index in this order. In the present embodiment, the number of layers of the dielectric multilayer film 6 is five. In a case in which the outermost layer is the low refractive index film 7 as in the present embodiment, a function as an antireflection film can be further enhanced.

Examples of a material of the low refractive index film 7 include silicon oxide as in the present embodiment or aluminum oxide.

Examples of a material of the high refractive index film 8 include niobium oxide as in the present embodiment, titanium oxide, zirconium oxide, hafnium oxide, tantalum oxide, silicon nitride, aluminum oxide, and aluminum nitride.

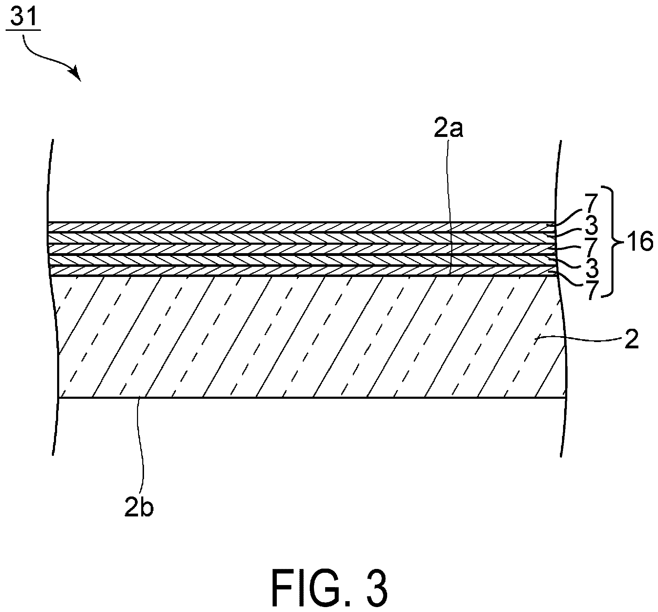

FIG. 3 is a schematic cross-sectional view illustrating a film-covered transparent substrate according to a third embodiment of the present invention. As illustrated in FIG. 3, in a film-covered transparent substrate 31, a dielectric multilayer film 16 including the light-absorbing film 3 is provided on the first principal surface 2a of the transparent substrate 2. Other points are similar to those in the first embodiment.

In the dielectric multilayer film 16, the low refractive index film 7 having a relatively low refractive index, and the light-absorbing film 3 as the high refractive index film having a relatively high refractive index are alternately layered in this order. In the present embodiment, the number of layers of the dielectric multilayer film 16 is five. Note that the light-absorbing film 3 is the light-absorbing film 3 described in the first embodiment, and the low refractive index film 7 is the low refractive index film 7 described in the second embodiment. Note that at least one layer of the light-absorbing film 3 having two layers may be the high refractive index film 8 described in the second embodiment.

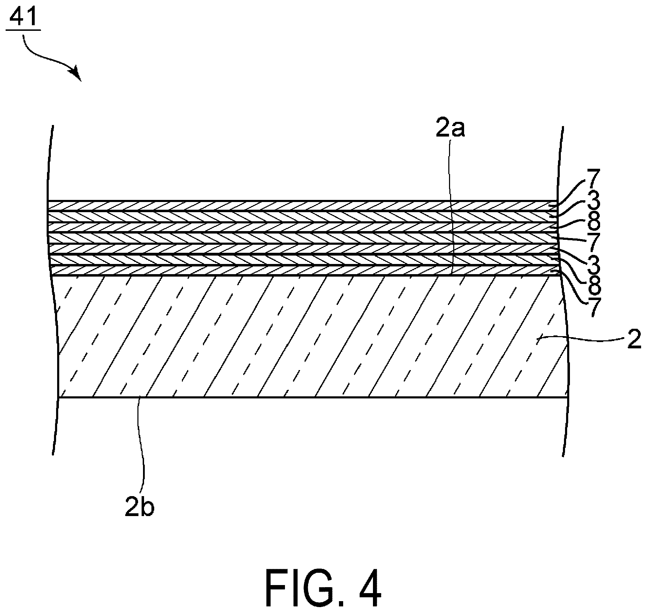

FIG. 4 is a schematic cross-sectional view illustrating a film-covered transparent substrate according to a fourth embodiment of the present invention. As illustrated in FIG. 4, in a film-covered transparent substrate 41, two light-absorbing films 3 are provided on the transparent substrate 2, and a dielectric multilayer film is further provided between the transparent substrate 2 and the light-absorbing film 3 and between the two light-absorbing films 3, 3. Other points are similar to those in the second embodiment.

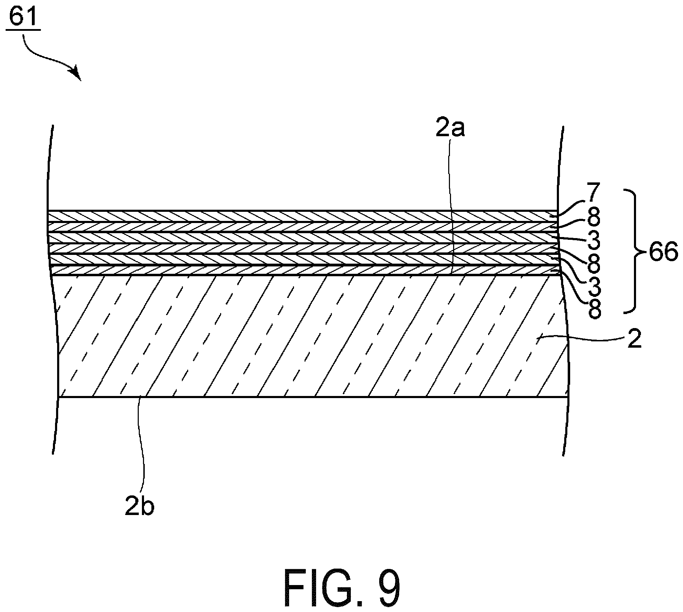

FIG. 9 is a schematic cross-sectional view illustrating a film-covered transparent substrate according to a fifth embodiment of the present invention. As illustrated in FIG. 9, in a film-covered transparent substrate 61, a dielectric multilayer film 66 including the light-absorbing film 3 is provided on the first principal surface 2a of the transparent substrate 2. Other points are similar to those in the first embodiment.

In the dielectric multilayer film 66, the high refractive index film 8 having a relatively high refractive index and the light-absorbing film 3 as the low refractive index film having a relatively low refractive index are alternately layered in this order. Further, the low refractive index film 7 that is a silicon oxide film ($SiO_2$ film) is provided as the outermost layer. In a case in which the low refractive index film 7 that is a silicon oxide film ($SiO_2$ film) is provided as the outermost layer, it is possible to further improve oxidation resistance, sulfurization resistance, weather resistance, and the like.

Further, in the present embodiment, the number of layers of the dielectric multilayer film 66 is six. Note that the light-absorbing film 3 is the light-absorbing film 3 described in the first embodiment, and the high refractive index film 8 is the high refractive index film 8 described in the second embodiment. Note that one layer of the light-absorbing film 3 having two layers may be the low refractive index film 7 described in the second embodiment.

Further, in the second to fifth embodiments as well, the light-absorbing film 3 contains Ag, Al, and Fe in proportions resulting in a mole ratio of Ag:Al:Fe = x:y:z, where $x + y + z = 1$, $0 < x < 1$, $0 < y < 1$, $0 \le z < 1$. For this reason, the display of various information can be made clearly visible when the light source is turned on, and excellent aesthetic properties can be achieved when the light source is turned off. In particular, the optical characteristics do not readily change even by heating, making it possible to achieve stably excellent aesthetic properties when the light source is turned off.

Further, the dielectric multilayer film 6 may be provided on the light-absorbing film 3 as in the second embodiment. The dielectric multilayer film including the light-absorbing film 3 may be provided on the transparent substrate 2 as in the third and fifth embodiments. Two light-absorbing films 3 may be provided on the transparent substrate 2 and a dielectric multilayer film may be further provided between the transparent substrate 2 and the light-absorbing film 3 and between the two light-absorbing films 3, 3 as in the fourth embodiment. In a case in which such a dielectric multilayer film is provided, the antireflection function, for example, can be further imparted. In this case, a contrast of the display can also be improved.

At this time, the light-absorbing film 3 may be used as a high refractive index film as in the third embodiment, or the light-absorbing film 3 may be used as a low refractive index film as in the fifth embodiment. The light-absorbing film 3 can be used as a low refractive index film or can be used as a high refractive index film by adjusting a magnitude of the refractive index by a target composition and film formation conditions, such as a film forming pressure. Note that the refractive index of the light-absorbing film 3 can be adjusted within a range from 1.2 to 2.0, for example.

Further, in the dielectric multilayer film of each embodiment, a total number of layers of the low refractive index film 7 and the high refractive index film 8 may be, for example, from 2 to 40. A thickness of the low refractive index film 7 may be, for example, from 5 nm to 300 nm per layer. Further, a thickness of the high refractive index film 8 may be, for example, from 3 nm to 200 nm per layer. In a case in which the light-absorbing film 3 is used, the thickness may be that described in the first embodiment.

Top Plate for Cooking Device

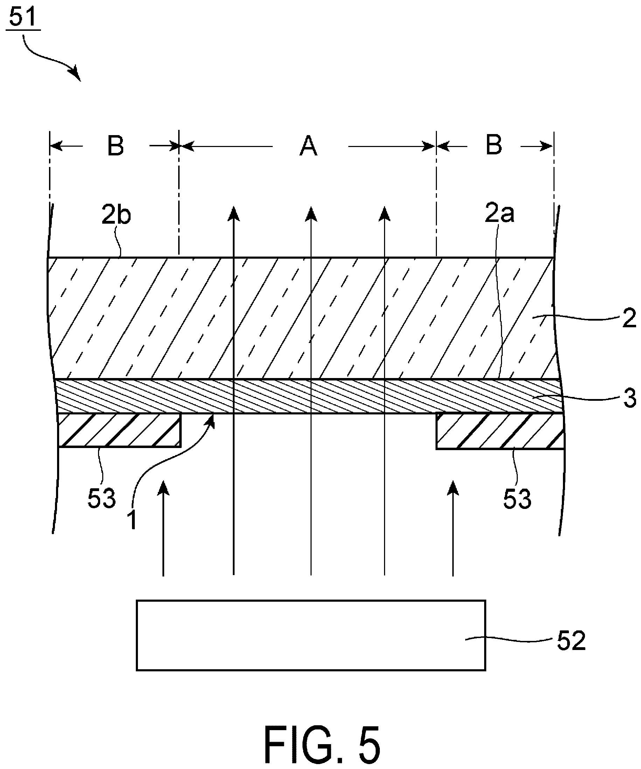

FIG. 5 is a schematic cross-sectional view illustrating a top plate for a cooking device according to an embodiment of the present invention. As illustrated in FIG. 5, a top plate 51 for a cooking device includes the film-covered transparent substrate 1.

In the top plate 51 for a cooking device, the second principal surface 2b of the transparent substrate 2 constituting the film-covered transparent substrate 1 is a cooking surface. On the other hand, the first principal surface 2a of the transparent substrate 2 constituting the film-coated transparent substrate 1 is a back surface. The cooking surface is a surface on which cookware such as a pot or a frying pan is placed. The back surface is a surface facing a light source 52, such as an LED and a display, and a heating device on an inner side of the cooking device. Accordingly, the cooking surface and the back surface are in a front and back relationship. Note that, in the present embodiment, the transparent substrate 2 is made of low-expansion crystallized glass.

The light-absorbing film 3 is provided on the back surface (first principal surface 2a) of the transparent substrate 2. A heat-resistant resin layer 53 is provided on the light-absorbing film 3. Note that the heat-resistant resin layer 53 may be provided between the transparent substrate 2 and the light-absorbing film 3. In the present embodiment, a region where the heat-resistant resin layer 53 is not provided in plan view is the display region A. Further, a region where the heat-resistant resin layer 53 is provided in plan view is the non-display region B.

The heat-resistant resin layer 53 is a light shielding layer. Accordingly, by providing the heat-resistant resin layer 53, it is possible to more reliably enhance concealability of the internal structure of the cooking device. The heat-resistant resin layer 53 can be composed of a heat-resistant resin such as a silicone resin, a coloring pigment, or the like. Note that the heat-resistant resin layer 53 need not be provided.

A light source 52, such as a display and an LED, is provided below the film-covered transparent substrate 1. The light source 52 is a member provided to display information in the display region A. The information displayed in the display region A is not particularly limited. Examples of the information include information indicating a state of the cooking device, such as a power-on state or a heating state, or information such as time.

In the display region A, light from the light source 52 is transmitted through the light-absorbing film 3 and the transparent substrate 2 and exits to the outside. Further, the light from the light source 52 is blocked by the heat-resistant resin layer 53 in the non-display region B. Accordingly, in the display region A, it is possible to display characters, numbers, symbols, and the like by transmitting light from the light source 52.

The top plate 51 for a cooking device includes the film-covered transparent substrate 1. Therefore, the display of various information can be made clearly visible when the light source 52 is turned on, and excellent aesthetic properties can be achieved when the light source is turned off. Further, it is possible to make the boundary between the display region A and the non-display region B less visible while concealing the structure inside the cooking device. Note that a display having a touch panel function may be built into the cooking device.

Cover Glass

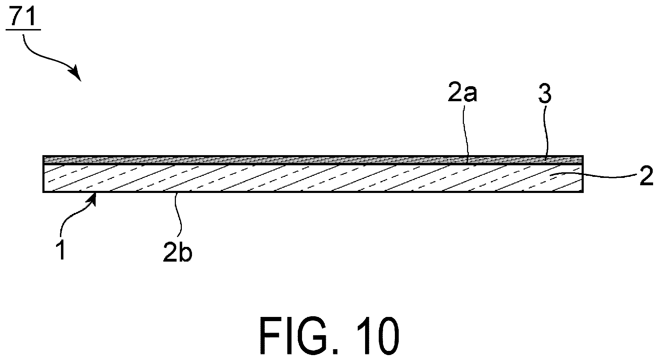

FIG. 10 is a schematic cross-sectional view illustrating a cover glass according to an embodiment of the present invention. As illustrated in FIG. 10, a cover glass 71 includes the film-covered transparent substrate 1. The cover glass 71 is, for example, a cover glass disposed on a front surface of the display.

In the cover glass 71, the first principal surface 2a of the transparent substrate 2 constituting the film-covered transparent substrate 1 is the principal surface disposed on an outer side. On the other hand, the second principal surface 2b of the transparent substrate 2 constituting the film-covered transparent substrate 1 is the principal surface on the display side. Accordingly, in the cover glass 71, the light-absorbing film 3 is provided on one principal surface (first principal surface 2a) opposite to the side provided with the display of the transparent substrate 2.

For the cover glass 71 as well, with the film-covered transparent substrate 1 being included, the optical characteristics do not readily change by heating, resulting in excellent aesthetic properties when the light source is turned off.

Further, in the cover glass 71 as well, an antireflection film may be formed using a dielectric multilayer film such as those described in the second to fifth embodiments.

Hereinafter, the present invention will be described in more detail based on examples. However, the following examples are merely illustrative. The present invention is not limited to the following examples in any way.

Example 1

In example 1, a light-absorbing film was formed on a glass substrate (manufactured by Nippon Electric Glass Co., Ltd., product name "N-0," thickness: 4 mm) as a transparent substrate by sputtering method using a mixed target of Ag, Al, and FeO. Note that the Ag content in the mixed target was 60 mol%. At this time, the substrate temperature was 300° C, and the oxygen partial pressure was 0.5 Pa. Further, the Ag content in the light-absorbing film was 88 mol%. The content ratio ($y/(y + z)$) of Al to the total amount of Al and Fe (Al/(Al + Fe)) was 0.14 in mole ratio. Note that the compositions of Ag, Al, and Fe were measured by inductively coupled plasma mass spectrometry.

Examples 2 to 4 and Comparative Example 1

Light-absorbing films were formed in the same manner as in Example 1 except that the target composition was changed so that the content ratios ($y/(y + z)$) of Al to the total of amount Al and Fe were, in mole ratio, as shown in Table 1 below.

Evaluation

Optical Characteristics

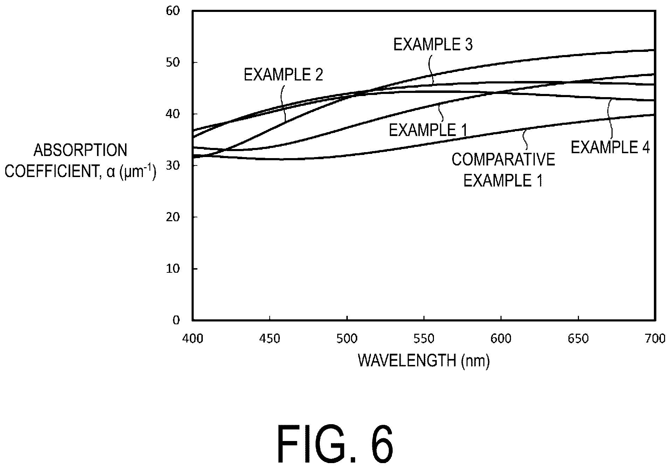

FIG. 6 is a graph showing absorption coefficients of the light-absorbing films obtained in examples 1 to 4 and comparative example 1 at wavelengths from 400 nm to 700 nm. From FIG. 6, it is understood that, in the light-absorbing films obtained in examples 1 to 4 as well as in the light-absorbing film obtained in comparative example 1, the absorption coefficient is substantially constant at the wavelengths from 400 nm to 700 nm. Note that, in the light-absorbing films obtained in examples 1 to 4 and comparative example 1, $\alpha 1/\alpha 2$, $\alpha 3/\alpha 2$, the average absorption coefficient $\alpha_{AVE}$, and the absorption average deviation M were as shown in Table 1 below, where $\alpha 1$ is the absorption coefficient at 436 nm, $\alpha 2$ is the absorption coefficient at 546 nm, and $\alpha 3$ is the absorption coefficient at 700 nm. Note that in Tables 1 and 2, ($y/(y + z)$) is written as (Al/(Al + Fe)).

Chroma and Lightness

The chroma $C^*_T$ of transmitted light and the chroma $C^*_R$ of reflected light in the film-covered transparent substrates obtained in examples 1 to 4 and comparative example 1 were determined. The chroma C* was determined on the basis of JIS Z 8781-4:2013 from the equation $C^* = ((a^*)^2 + (b^*)^2)^{1/2}$ by evaluating the lightness (L*) and the chromaticities (a* and b*) when irradiated with a D65 light source from the side opposite to the film formation surface using a spectral transmittance meter (manufactured by Hitachi High-Tech Corporation, product number "U-4100") for the chroma $C^*_T$ of transmitted light and using a colorimeter (manufactured by Konica Minolta, Inc., "CM2600d") for the chroma $C^*_R$ of reflected light. The chroma $C^*_T$ of the transmitted light and the chroma $C^*_R$ of the reflected light were as shown in Table 1 below.

Further, a portion of the film-covered transparent substrate provided with the light-absorbing film was used as the display region, a heat-resistant resin layer having a thickness of 15 $\mu$m was separately fabricated on the light-absorbing film, and a portion provided with this heat-resistant resin layer was used as the non-display region. Note that the heat-resistant resin layer was fabricated by mixing 34 parts by mass of silicone resin, 29 parts by mass of a black pigment, and 37 parts by mass of a solvent to prepare a paste, and applying the paste onto the light-absorbing film.

For the display region and the non-display region obtained as described above, an absolute value of a difference in chroma $C^*_R$ of the reflected light between the display region and the non-display region and an absolute value of a difference in lightness (L*) of the reflected light between the display region and the non-display region were obtained.

Sheet Resistance

The sheet resistances of the film-covered transparent substrates obtained in examples 1 to 4 and comparative example 1 were measured by a direct-current two-terminal method using platinum electrodes. The results are shown in Table 1 below.

[Table 1]

| | Example 1 | Example 2 | Example 3 | Example 4 | Comparative example 1 |
|---|---|---|---|---|---|
| Al/(Al + Fe) | 0.14 | 0.38 | 0.58 | 0.75 | 0 |
| $\alpha 1$ | 33.1 | 35.0 | 39.7 | 39.3 | 31.4 |
| $\alpha 2$ | 41.0 | 46.9 | 45.4 | 44.4 | 33.9 |
| $\alpha 3$ | 47.7 | 52.4 | 45.7 | 42.6 | 39.9 |
| $\alpha_{AVE}$ | 40.6 | 45.1 | 43.9 | 42.6 | 34.7 |
| $\alpha 1/\alpha 2$ | 0.8 | 0.7 | 0.9 | 0.9 | 0.9 |
| $\alpha 3/\alpha 2$ | 1.2 | 1.1 | 1.0 | 1.0 | 1.2 |
| M | 0.11 | 0.12 | 0.05 | 0.04 | 0.08 |
| Thickness of light-absorbing film (nm) | 44 | 32 | 24 | 33 | 57 |
| Chroma ($C^*_T$) | 1.7 | 1.9 | 0.8 | 0.5 | 1.3 |
| Chroma ($C^*_R$) | 1.3 | 1.5 | 0.5 | 0.4 | 0.8 |
| Absolute value of difference in $C^{*R}$ | 0.5 | 0.3 | 0.2 | 0.3 | 0.5 |
| Absolute value of difference in L* | 0.8 | 0.7 | 0.4 | 0.6 | 0.9 |
| Sheet resistance ($\Omega$) | $9 \times 10^6$ | $7 \times 10^6$ | $4 \times 10^9$ | $8 \times 10^7$ | $2 \times 10^7$ |

Heat Resistance Test

The film-covered transparent substrates obtained in example 3 and comparative example 1 were heat-treated at temperatures of 100° C, 200° C, and 300° C for 10 minutes, respectively. For the samples heat-treated at 100° C, the difference in transmittance from the non-heat-treated samples was measured at wavelengths 436 nm, 546 nm, and 700 nm. The results are shown in Table 2 below.

[Table 2]

|  |  | Example 3 | Comparative example 1 |
|---|---|---|---|
| Al/(Al + Fe) | | 0.58 | 0 |
| Heat treatment temperature | | 100° C | 100° C |
| Transmittance difference from non-heat-treated samples | Wavelength 436 nm | 0.4% | 4.8% |
| | Wavelength 546 nm | 0.6% | 6.7% |
| | Wavelength 700 nm | 0.7% | 6.0% |

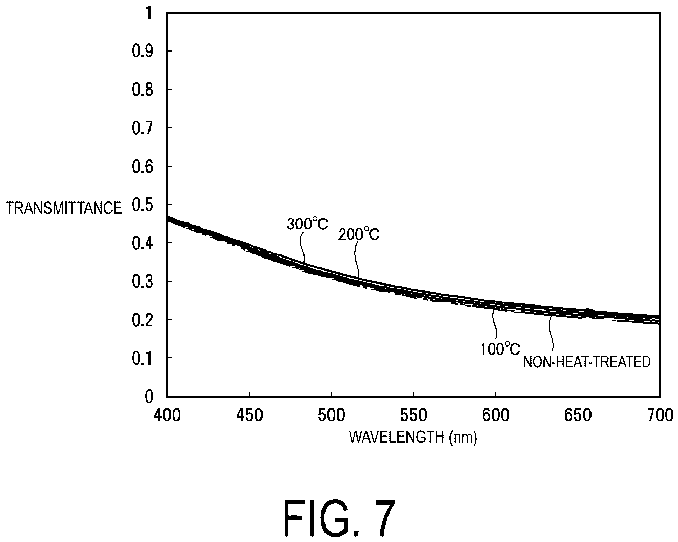

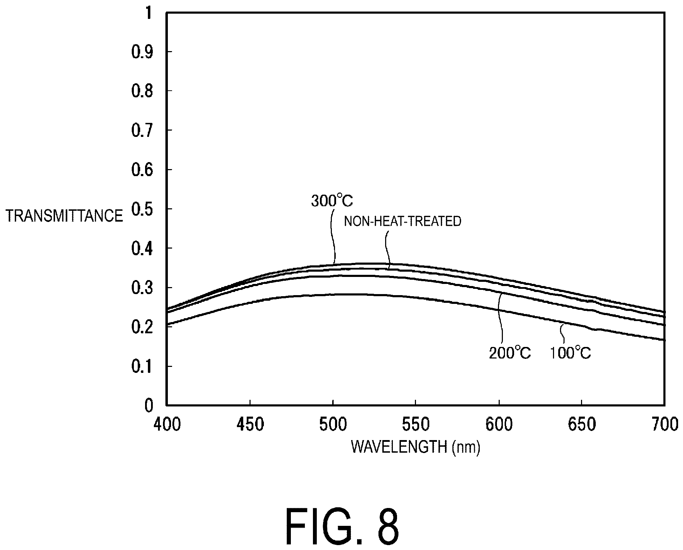

Further, FIG. 7 is a graph showing transmission spectra of the film-covered transparent substrate after heat treatment in example 3. FIG. 8 is a graph showing transmission spectra of the film-covered transparent substrate after heat treatment in comparative example 1. Note that, in FIGS. 7 and 8, the transmission spectrum of the non-heat-treated film-covered transparent substrate is also shown.

From Table 2 and FIG. 7, it is understood that, in the film-covered transparent substrate of example 3, the optical characteristics do not substantially change even when the heat treatment is performed at any of the temperatures. On the other hand, from Table 2 and FIG. 8, it is understood that, in the film-covered transparent substrate of comparative example 1, the optical characteristics significantly change by heat treatment.

Note that, in the film-covered transparent substrates of examples 1 and 2 and example 4 as well, similarly to example 3, it was confirmed that the optical characteristics do not substantially change even when heat treatment is performed at any of the temperatures.

In the film-covered transparent substrates of examples 1 to 4, it was confirmed that the optical characteristics do not readily change by heating, and excellent aesthetic properties are achieved even when the light source was turned off.

Example 5

A dielectric multilayer film was fabricated by sputtering method on a glass substrate (manufactured by Nippon Electric Glass Co., Ltd., product name "T2X-1," thickness: 1.3 mm, refractive index: 1.52 (wavelength: 550 nm)) serving as transparent substrate. Specifically, with the configuration shown in Table 3 below, the dielectric multilayer film was fabricated by alternately layering the light-absorbing film of example 3, a niobium oxide film ($Nb_2O_5$) film, the light-absorbing film of example 3, and a silicon oxide film ($SiO_2$ film) in this order on the glass substrate. Note that the refractive index is the refractive index at 550 nm.

[Table 3]

| Material | Thickness | Refractive index |
|---|---|---|
| $SiO_2$ | 76.8 nm | 1.46 |
| Light-absorbing film | 8.2 nm | 1.18 |
| $Nb_2O_5$ | 25.5 nm | 2.29 |
| Light-absorbing film | 15.0 nm | 1.18 |
| Glass | | 1.52 |

For the film-covered transparent substrate obtained in Example 5, transmission spectra and reflection spectra were measured from the film formation surface side using a spectral transmittance meter (manufactured by Hitachi High-Tech Corporation, product number "U-4100"). Specifically, an angle of incidence (AOI) was set to 0°, 15°, 30°, and 45° and the measurement wavelength range was from 380 nm to 780 nm. From the obtained transmittance spectra and reflectance spectra, luminous reflectance, luminous transmittance, lightness (L*) of reflected and transmitted light, and chromaticities (a* and b*) when irradiated with the D65 light source were determined. The results are shown in Table 4 below.

[Table 4]

| | Reflectance | | | | Transmittance | | | |
|---|---|---|---|---|---|---|---|---|
| Angle of incidence (°) | 0 | 15 | 30 | 45 | 0 | 15 | 30 | 45 |
| Luminous reflectance/luminous transmittance (%) | 0.3 | 0.3 | 0.6 | 1.5 | 58.2 | 57.8 | 56.6 | 54.3 |
| L* | 2.3 | 2.8 | 5.1 | 12.9 | 80.9 | 80.7 | 80 | 78.6 |
| a* | 0.4 | 0.5 | 1.5 | 3.6 | -2.5 | -2.4 | -2.4 | -2.5 |
| b* | 1.9 | 2 | 2 | 2.8 | -4.6 | -4.4 | -3.8 | -2.9 |

Example 6

A dielectric multilayer film was fabricated by sputtering method on a glass substrate (manufactured by Nippon Electric Glass Co., Ltd., product name "T2X-1," thickness: 1.3 mm, refractive index: 1.52 (wavelength: 550 nm)) serving as transparent substrate. Specifically, with the configuration shown in Table 5 below, the dielectric multilayer film was fabricated by alternately layering a silicon nitride film (SiN film), the light-absorbing film of example 3, an SiN film, the light-absorbing film of example 3, an SiN film, and an SiO$_2$ film in this order on the glass substrate. Note that the refractive index is the refractive index at 550 nm.

[Table 5]

| Material | Thickness | Refractive index |
|---|---|---|
| SiO$_2$ | 70.3 nm | 1.46 |
| SiN | 7.0 nm | 1.99 |
| Light-absorbing film | 10.0 nm | 1.18 |
| SiN | 51.2 nm | 1.99 |
| Light-absorbing film | 15.0 nm | 1.18 |
| SiN | 22.1 nm | 1.99 |
| Glass | | |

For the film-covered transparent substrate obtained in example 6, transmission spectra and reflection spectra were measured from the film formation surface side using a spectral transmittance meter (manufactured by Hitachi High-Tech Corporation, product number "U-4100"). Specifically, an angle of incidence (AOI) was set to 0°, 15°, 30°, and 45° and the measurement wavelength range was from 380 nm to 780 nm. From the obtained transmittance spectra and reflectance spectra, luminous reflectance, luminous transmittance, lightness (L*) of reflected and transmitted light, and chromaticities (a* and b*) when irradiated with the D65 light source were determined. The results are shown in Table 6 below.

[Table 6]

| | Reflectance | | | | Transmittance | | | |
|---|---|---|---|---|---|---|---|---|
| Angle of incidence (°) | 0 | 15 | 30 | 45 | 0 | 15 | 30 | 45 |
| Luminous reflectance/luminous transmittance (%) | 0.3 | 0.3 | 0.5 | 1.3 | 58 | 57.6 | 56.3 | 53.9 |
| L* | 2.5 | 2.7 | 4.3 | 10.9 | 80.7 | 80.5 | 79.8 | 78.4 |
| a* | -0.2 | 0 | 1.2 | 4 | -2.8 | -2.8 | -2.8 | -2.8 |
| b* | -0.1 | 0.5 | 1.9 | 4.2 | -4.8 | -4.5 | -3.5 | -2.8 |

Example 7

A dielectric multilayer film was fabricated by sputtering method on a glass substrate (manufactured by Nippon Electric Glass Co., Ltd., product name "N-0," thickness: 4 mm, refractive index: 1.54 (wavelength: 550 nm)) serving as transparent substrate. Specifically, with the configuration shown in Table 7 below, the dielectric multilayer film was fabricated by alternately layering an $Nb_2O_5$ film, the light-absorbing film of example 3, an $Nb_2O_5$ film, the light-absorbing film of example 3, and an $SiO_2$ film in this order on the glass substrate. Note that the refractive index is the refractive index at 550 nm.

[Table 7]

| Material | Thickness | Refractive index |
|---|---|---|
| Glass | | |
| $Nb_2O_5$ | 35.8 nm | 2.29 |
| Light-absorbing film | 10.0 nm | 1.18 |
| $Nb_2O_5$ | 51.7 nm | 2.29 |
| Light-absorbing film | 9.5 nm | 1.18 |
| $SiO_2$ | 71.9 nm | 1.46 |

For the film-covered transparent substrate obtained in example 7, transmission spectra and reflection spectra were measured from a side opposite to the film formation surface side using a spectral transmittance meter (manufactured by Hitachi High-Tech Corporation, product number "U-4100"). Specifically, an angle of incidence (AOI) was set to 0°, 15°, 30°, and 45° and the measurement wavelength range was from 380 to 780 nm. From the obtained transmittance spectra and reflectance spectra, luminous reflectance, luminous transmittance, lightness (L*) of reflected and transmitted light, and chromaticities (a* and b*) when irradiated with the D65 light source were determined. The results are shown in Table 8 below.

[Table 8]

| | Reflectance | | | | Transmittance | | | |
|---|---|---|---|---|---|---|---|---|
| Angle of incidence (°) | 0 | 15 | 30 | 45 | 0 | 15 | 30 | 45 |
| Luminous reflectance/luminous transmittance (%) | 4.8 | 4.8 | 5 | 6.2 | 68.5 | 68 | 66.7 | 64 |
| L* | 26.3 | 26.2 | 26.7 | 29.8 | 86.2 | 86 | 85.4 | 84 |
| a* | 0.5 | 1.1 | 3 | 5 | -2.1 | -2.2 | -2.5 | -2.9 |
| b* | -0.9 | -1 | -1.2 | -0.9 | -4.9 | -4.6 | -3.7 | -2.5 |

Example 8

A dielectric multilayer film was fabricated by sputtering method on a glass substrate (manufactured by Nippon Electric Glass Co., Ltd., product name "N-0," thickness: 4 mm, refractive index: 1.54 (wavelength: 550 nm)) serving as transparent substrate. Specifically, with the configuration shown in Table 9 below, the dielectric multilayer film was fabricated by alternately layering an SiN film, the light-absorbing film of example 3, an SiN film, the light-absorbing film of example 3, and an SiN film in this order on the glass substrate. Note that the refractive index is the refractive index at 550 nm.

[Table 9]

| Material | Thickness | Refractive index |
|---|---|---|
| Glass | | |
| SiN | 39.8 nm | 1.99 |
| Light-absorbing film | 7.0 nm | 1.18 |
| SiN | 92.8 nm | 1.99 |
| Light-absorbing film | 15.6 nm | 1.18 |
| SiN | 19.1 nm | 1.99 |

For the film-covered transparent substrate obtained in example 8, transmission spectra and reflection spectra were measured from a side opposite to the film formation surface side using a spectral transmittance meter (manufactured by Hitachi High-Tech Corporation, product number "U-4100"). Specifically, an angle of incidence (AOI) was set to 0°, 15°, 30°, and 45° and the measurement wavelength range was from 380 nm to 780 nm. From the obtained transmittance spectra and reflectance spectra, luminous reflectance, luminous transmittance, lightness ($L^*$) of reflected and transmitted light, and chromaticities ($a^*$ and $b^*$) when irradiated with the D65 light source were determined. The results are shown in Table 10 below.

[Table 10]

|  | Reflectance | | | | Transmittance | | | |
|---|---|---|---|---|---|---|---|---|
| Angle of incidence (°) | 0 | 15 | 30 | 45 | 0 | 15 | 30 | 45 |
| Luminous reflectance/luminous transmittance (%) | 4.5 | 4.5 | 4.6 | 5.9 | 57 | 56.7 | 55.5 | 53 |
| $L^*$ | 25.1 | 25.1 | 25.7 | 29.1 | 80.2 | 80 | 79.4 | 77.9 |
| $a^*$ | 0.8 | 1.1 | 2 | 2.8 | -2.7 | -2.8 | -2.9 | -3 |
| $b^*$ | -1.2 | -1.2 | -1.4 | -2 | -4.6 | -4.2 | -3.2 | -2.6 |

From Table 4, Table 6, Table 8, and Table 10, in the film-covered transparent substrates obtained in examples 5 to 8, $a^*$ and $b^*$ were small, and a reflection color and a transmission color were neutral. Further, it was confirmed that, in the film-covered transparent substrates obtained in examples 5 to 8, $a^*$ and $b^*$ do not readily change, and there is substantially no color shift within the angle of incidence range from 0° to 45°.

Reference Signs List

1, 21, 31, 41, 61 Film-covered transparent substrate
2 Transparent substrate
2a First principal surface
2b Second principal surface
3 Light-absorbing film
6, 16, 66 Dielectric multilayer film
7 Low refractive index film
8 High refractive index film
51 Top plate for cooking device
52 Light source
53 Heat-resistant resin layer
71 Cover glass

**Claims**

1.  A film-covered transparent substrate comprising:

    a transparent substrate; and
    a light-absorbing film provided on one principal surface of the transparent substrate, wherein
    the light-absorbing film contains Ag, Al, and Fe in proportions resulting in a mole ratio of
    Ag:Al:Fe = x:y:z
    where $x + y + z = 1$, $0 < x < 1$, $0 < y < 1$, $0 \leq z < 1$.

2.  The film-covered transparent substrate according to claim 1, wherein the light-absorbing film further contains O.

3.  The film-covered transparent substrate according to claim 1 or 2, wherein a content ratio ($y/(y + z)$) of Al to a total amount of Al and Fe is 0.10 or greater in mole ratio.

**4.** The film-covered transparent substrate according to any one of claims 1 to 3, wherein a content ratio (x/(x + y + z)) of Ag to a total amount of Ag, Al, and Fe is 0.05 or greater and 0.90 or less in mole ratio.

**5.** The film-covered transparent substrate according to any one of claims 1 to 4, wherein an average absorption coefficient of the light-absorbing film at wavelengths from 400 nm to 700 nm is 0.5 $\mu$m$^{-1}$ or greater and 80 $\mu$m$^{-1}$ or less.

**6.** The film-covered transparent substrate according to any one of claims 1 to 5, wherein
in the light-absorbing film,

$\alpha 1/\alpha 2$ is 0.8 or greater and 2.0 or less, and
$\alpha 3/\alpha 2$ is 0.8 or greater and 2.0 or less,
where $\alpha 1$ is an absorption coefficient at a wavelength of 436 nm, $\alpha 2$ is an absorption coefficient at a wavelength of 546 nm, and $\alpha 3$ is an absorption coefficient at a wavelength of 700 nm.

**7.** The film-covered transparent substrate according to claim 6, wherein
in the light-absorbing film,

the $\alpha 1/\alpha 2$ is 0.8 or greater and 1.25 or less, and
the $\alpha 3/\alpha 2$ is 0.8 or greater and 1.25 or less.

**8.** The film-covered transparent substrate according to any one of claims 1 to 7, wherein in the light-absorbing film, an absorption average deviation M expressed by the equation (1) below is 0.30 or less:
[Equation 1]

$$M = \frac{\int_{400}^{700} |\alpha_{AVE} - \alpha_\lambda| \ d\lambda}{300 \ \alpha_{AVE}} \quad \cdot \cdot \cdot \ \text{EQUATION (1)}$$

where $\alpha_\lambda$ is an absorption coefficient at wavelength $\lambda$, and $\alpha_{AVE}$ is an average absorption coefficient at wavelengths from 400 nm to 700 nm.

**9.** The film-covered transparent substrate according to any one of claims 1 to 8, wherein a dielectric multilayer film is further provided on the light-absorbing film.

**10.** The film-covered transparent substrate according to any one of claims 1 to 8, further comprising

a dielectric multilayer film provided on one principal surface of the transparent substrate and including the light-absorbing film, wherein
the dielectric multilayer film is a layered film obtained by alternately layering a high refractive index film having a relatively high refractive index and a low refractive index film having a relatively low refractive index, and
at least one layer of the high refractive index film is the light-absorbing film.

**11.** The film-covered transparent substrate according to any one of claims 1 to 8, further comprising

a dielectric multilayer film provided on one principal surface of the transparent substrate and including the light-absorbing film, wherein
the dielectric multilayer film is a layered film obtained by alternately layering a high refractive index film having a relatively high refractive index and a low refractive index film having a relatively low refractive index, and
at least one layer of the low refractive index film is the light-absorbing film.

**12.** A top plate for a cooking device, the top plate comprising

the film-covered transparent substrate according to any one of claims 1 to 11, wherein
the transparent substrate includes a cooking surface on which cookware is placed and a back surface opposite to the cooking surface, and

the light-absorbing film is disposed on the back surface of the transparent substrate.

**13.** A cover glass to be used in a display, the cover glass comprising

the film-covered transparent substrate according to any one of claims 1 to 11, wherein
the light-absorbing film is disposed on a principal surface opposite to a side provided with the display of the transparent substrate.

FIG. 1

FIG. 2

31

2a

7
3
7
16
7
3
7

2

2b

# FIG. 3

41

2a

7
3
8
10
7
3
8
10
7

2

2b

# FIG. 4

FIG. 5

FIG. 6

FIG. 7

FIG. 8

61

2a

7
8
3
8  } 66
3
8

2

2b

# FIG. 9

71

2a    3

2

1    2b

FIG. 10

<div style="text-align:center">**INTERNATIONAL SEARCH REPORT**</div>

| International application No. |
| --- |
| **PCT/JP2021/043656** |

**A.    CLASSIFICATION OF SUBJECT MATTER**

*C03C 17/245*(2006.01)i; *C03C 17/34*(2006.01)i; *H05B 6/12*(2006.01)i; *F24C 15/10*(2006.01)i
FI:    C03C17/245 A; H05B6/12 305; C03C17/34 Z; F24C15/10 B

According to International Patent Classification (IPC) or to both national classification and IPC

**B.    FIELDS SEARCHED**

Minimum documentation searched (classification system followed by classification symbols)
    C03C17/00-17/44; H05B6/12; F24C15/10; G09F9/00

Documentation searched other than minimum documentation to the extent that such documents are included in the fields searched
    Published examined utility model applications of Japan 1922-1996
    Published unexamined utility model applications of Japan 1971-2022
    Registered utility model specifications of Japan 1996-2022
    Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2014-156358 A (ASAHI GLASS CO., LTD.) 28 August 2014 (2014-08-28)<br>    paragraphs [0023]-[0032], [0051]-[0056] | 1-11 |
| Y |  | 12, 13 |
| Y | JP 2019-123666 A (EUROKERA S. N. C.) 25 July 2019 (2019-07-25)<br>    paragraphs [0001], [0037], [0038], [0048]-[0054] | 12, 13 |
| A | JP 2003-261355 A (CENTRAL GLASS CO., LTD.) 16 September 2003 (2003-09-16)<br>    claims, paragraphs [0001], [0006], example 1 | 1-13 |
| A | JP 2020-510596 A (GUARDIAN GLASS, L. L. C.) 09 April 2020 (2020-04-09)<br>    claims, paragraphs [0001], [0012], [0026] | 1-13 |
| A | JP 2008-540320 A (AGC FLAT GLASS NORTH AMERICA, INC.) 20 November 2008<br>(2008-11-20)<br>    claims, paragraphs [0004], [0009] | 1-13 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 January 2022** | **08 February 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2021/043656**

| Patent document cited in search report | | | Publication date (day/month/year) | Patent family member(s) | | | Publication date (day/month/year) |
|---|---|---|---|---|---|---|---|
| JP | 2014-156358 | A | 28 August 2014 | WO | 2012/169603 | A1 | |
| JP | 2019-123666 | A | 25 July 2019 | US | 2016/0338152 | A1 | |
| | | | | paragraphs [0001], [0035], [0036], [0046]-[0052] | | | |
| | | | | WO | 2015/092245 | A1 | |
| | | | | CN | 105813994 | A | |
| | | | | KR | 10-2016-0100966 | A | |
| JP | 2003-261355 | A | 16 September 2003 | US | 2003/0039842 | A1 | |
| | | | | claims, paragraphs [0001], [0007], example 1 | | | |
| | | | | EP | 1254871 | A1 | |
| JP | 2020-510596 | A | 09 April 2020 | US | 2018/0251886 | A1 | |
| | | | | claims, paragraphs [0001], [0012], [0026] | | | |
| | | | | WO | 2018/160616 | A2 | |
| | | | | EP | 3589596 | A2 | |
| | | | | KR | 10-2019-0123744 | A | |
| | | | | CN | 110573467 | A | |
| JP | 2008-540320 | A | 20 November 2008 | US | 2007/0281171 | A1 | |
| | | | | claims, paragraphs [0004], [0009] | | | |
| | | | | WO | 2006/124503 | A2 | |
| | | | | EP | 1881893 | A4 | |
| | | | | KR | 10-2008-0015002 | A | |
| | | | | CN | 101237990 | A | |

Form PCT/ISA/210 (patent family annex) (January 2015)

**EP 4 265 576 A1**

**Patent documents cited in the description**

- JP 2014215018 A